# EUROPÄISCHE PATENTSCHRIFT

(11) **EP 4 309 880 B1**
(45) Veröffentlichungstag und Bekanntmachung des Hinweises auf die Patenterteilung: **02.09.2026**
(21) Anmeldenummer: 23185467.0
(22) Anmeldetag: 14.07.2023
(51) Int. Cl.: B29C 65/08, B29C 65/18, B29C 65/00, B31B 70/85, B65D 77/22, B29L 31/56, B29L 31/00, B31B 170/00

(54) **VERFAHREN ZUR HERSTELLUNG ZUMINDEST EINES AROMASCHUTZVENTILS SOWIE AROMASCHUTZVENTIL**
METHOD FOR PRODUCING AT LEAST ONE AROMA PROTECTION VALVE AND AROMA PROTECTION VALVE
PROCÉDÉ DE FABRICATION D'AU MOINS UNE SOUPAPE DE PROTECTION AROMATIQUE ET SOUPAPE DE PROTECTION AROMATIQUE

(30) Priorität: 14.07.2022 DE 102022117642
(43) Veröffentlichungstag der Anmeldung: 24.01.2024
(73) Patentinhaber: Hesser Packaging GmbH, 71332 Waiblingen (DE)
(72) Erfinder: Haase, Jenny, 71573 Allmersbach (DE); Schmid, Felix, 78052 Villingen-Schwenningen (DE)
(74) Vertreter: Novagraaf Group

(56) Entgegenhaltungen:
- DE-A1- 102019 214 316
- DE-A1- 102019 214 317

## Beschreibung

### Stand der Technik

Aus dem Stand der Technik sind bereits Einweg-Entgasungsventile bekannt, welche durch Kaschierung verschiedener Einzelmaterialien hergestellt sowie selbstklebend auf einer Außenseite eines Verpackungsbehälters aufgebracht werden. Die jeweiligen Einzelmaterialien werden im Stand der Technik bislang mittels Aufbringung einer Klebeschicht miteinander verbunden. Beispielsweise wird im Stand der Technik ein Basiselement des Einweg-Entgasungsventils über einen kaschierten Klebeauftrag, ferner klebend, mit einer Ventilmembran des Einweg-Entgasungsventils verbunden. Aufgrund der Klebeschichten zwischen den Einzelmaterialien enthält das Einweg-Entgasungsventil eine hohe Anzahl an Fremdstoffen, welche vor allem eine sortenreine Trennung der Einzelmaterialien des Einweg-Entgasungsventils bei Verwertung des Einweg-Entgasungsventils nach einem Gebrauch und/oder einer Benutzung erheblich erschweren.

Aus DE 30 31 208 A1 ist bereits ein Verfahren zur Herstellung zumindest eines Aromaschutzventils für einen Verpackungsbehälter bekannt, wobei ein Basiselement und eine Ventilmembran des Aromaschutzventils in einem Fügeprozess mittels Energieeintragung zumindest abschnittsweise verbunden werden.

Ferner sind aus DE 10 2019 214 317 A1 und DE 10 2019 214 316 A1 bereits Verfahren zur Herstellung zumindest eines, insbesondere außenliegendes, Aromaschutzventils für einen Verpackungsbehälter, mit einem Basiselement und mit einer Ventilmembran, welche mit dem Basiselement in einem Fügeprozess mittels Energieeintragung zumindest indirekt über eine umliegende Folie, an der die Ventilmembran über einen Steg befestigt ist, abschnittsweise verbunden wird, bekannt. Das Basiselement und die Ventilmembran werden in dem Fügeprozess klebstofffrei miteinander verbunden, wobei der Fügeprozess eine Ultraschallschweißung sein kann.

Die Aufgabe der Erfindung besteht insbesondere darin, ein gattungsgemäßes Verfahren und/oder ein gattungsgemäßes Produkt mit verbesserten Eigenschaften hinsichtlich einer Effizienz bei Herstellung von Aromaschutzventilen, einer Reduzierung von Fremdstoffen und/oder einer verbesserten Recyclebarkeit bereitzustellen. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

### Offenbarung der Erfindung

Die Erfindung geht aus von einem Verfahren zur Herstellung zumindest eines, insbesondere außenliegenden, Aromaschutzventils für einen Verpackungsbehälter, mit zumindest einem Basiselement und mit zumindest einer, insbesondere flexiblen, Ventilmembran, welche mit dem Basiselement in einem Fügeprozess mittels Energieeintragung zumindest abschnittsweise verbunden wird, wobei das Basiselement und die Ventilmembran in dem Fügeprozess klebstofffrei miteinander verbunden werden.

Es wird vorgeschlagen, dass das Basiselement und die Ventilmembran in dem Fügeprozess zumindest abschnittsweise mittels einer Ultraschallschweißung verbunden werden, wobei das Basiselement und die Ventilmembran in dem Fügeprozess auf einem Grundelement, insbesondere einer Folienbahn, das zu einer Handhabung und/oder Stabilisierung des Basiselements und/oder der Ventilmembran während des Fügeprozesses vorgesehen ist, miteinander verbunden werden.

Durch ein derartiges Herstellungsverfahren können Fremdstoffanteile in zumindest einem Aromaschutzventil reduziert und bevorzugt verhindert werden. Damit kann eine Sortenreinheit des Aromaschutzventils optimiert und ein nachhaltigeres Aromaschutzventil bereitgestellt und/oder hergestellt werden. Ferner kann eine Recyclebarkeit des Aromaschutzventils und/oder eines Verpackungsbehälters, an welchem das hergestellte Aromaschutzventil angeordnet werden und/oder sein kann, verbessert werden. Zudem kann eine Lebensmittelkonformität, Fügequalität, Dichtigkeit, Lebensdauer, Langlebigkeit und/oder flexiblere Einsetzbarkeit des Aromaschutzventils gesteigert werden. Darüber hinaus kann das Herstellungsverfahren effizienter, beispielsweise schneller, komfortabler und/oder aufwandsreduzierender gestaltet werden. Des Weiteren kann eine Kosten- und/oder eine Produkt- und/oder eine Arbeitseffizienz gesteigert werden, da mittels der Energieeintragung in einem Fügeprozess auf zusätzliche Verbindungsstücke/Verbindungselemente, wie beispielsweise Klebstoffe, zur Fügung eines Basiselements und einer Ventilmembran des Aromaschutzventils verzichtet werden kann.

Ferner geht die vorliegende Erfindung aus von einem Aromaschutzventil, insbesondere einem außenliegenden Aromaschutzventil, für einen Verpackungsbehälter, welches zumindest teilweise durch das bereits genannte Verfahren hergestellt ist, wobei das Basiselement und die Ventilmembran klebstofffrei miteinander verbunden sind. Es wird vorgeschlagen, dass das Basiselement und die Ventilmembran in einem Fügeprozess auf einem Grundelement, insbesondere einer Folienbahn, miteinander verbunden wurden, das für einen Applikationsprozess, in dem das Aromaschutzventil an dem Verpackungsbehälter anordenbar ist, entfernbar ist. Insbesondere ist das Aromaschutzventil dazu vorgesehen, für einen Druckausgleich im Verpackungsbehälter zu sorgen und vorteilhaft den Verpackungsbehälter vor einem Platzen und/oder Kaputtgehen zu schützen sowie in dem Verpackungsbehälter enthaltene Aromastoffe ausgehend von zumindest einem Füllgut zu erhalten. Insbesondere ist der Verpackungsbehälter dazu vorgesehen, das Füllgut zu verpacken, und zwar das Füllgut zumindest teilweise und bevorzugt vollständig aufzunehmen, zu lagern und/oder zu umschließen. Das in dem Verpackungsbehälter angeordnete Füllgut kann Gase, und zwar aromatische Gase abgeben. Beispielsweise wenn es sich bei dem Füllgut um Kaffeebohnen handelt, können bei einem Verpacken der Kaffeebohnen nach einem Röstvorgang Gase, zumindest teilweise und vorteilhaft zu einem Großteil bestehend aus Kohlendioxid, ausgehend von den Kaffeebohnen entweichen. Die Kaffeebohnen können auch noch nach mehreren Wochen kontinuierlich Gase abgeben. Das Gas kann sich in dem Verpackungsbehälter ausbreiten und mit zunehmender Zeit einen ansteigenden Druck erzeugen, welcher gegen eine Innenwand des Verpackungsbehälters drückt. Ist der Druck zu groß, kann es möglicherweise zu einem Versagen, und zwar einem Kaputtgehen und/oder Platzen des Verpackungsbehälters kommen. Mittels des Aromaschutzventils kann ein Druckausgleich in dem Verpackungsbehälter erreicht werden, und zwar indem das Gas durch das Aromaschutzventil entweichen kann.

Das Aromaschutzventil kann den Austritt von Gasen in eine Bewegungsrichtung ermöglichen, und zwar bevorzugt von einem Innenraum des Verpackungsbehälters, in welchem das Füllgut angeordnet ist, in eine Umgebung des Verpackungsbehälters. Vorteilhaft ist das Aromaschutzventil zu einem konstanten Austreten von Gasen vorgesehen. Ferner kann das Aromaschutzventil ein Eindringen von Gasen, wie beispielsweise Sauerstoff, aus der Umgebung des Verpackungsbehälters in den Innenraum des Verpackungsbehälters verhindern, um bevorzugt einen Aromaschutz für das Füllgut zu gewährleisten. Vorteilhaft erfolgt ein Öffnen zumindest einer Entlüftungsöffnung des Aromaschutzventils zum Austritt von Gasen, wenn eine, insbesondere vordefinierte Solldruckdifferenz zwischen einem Druck im Innenraum des Verpackungsbehälters und einem Druck in der Umgebung des Verpackungsbehälters erreicht ist. Alternativ und/oder zusätzlich kann sich zumindest die Entlüftungsöffnung des Aromaschutzventils öffnen, wenn der Druck im Innenraum über den atmosphärischen Druck steigt und damit die Adhäsions- und Kohäsionskräfte löst, um Gas über zumindest die Entlüftungsöffnung entweichen zu lassen. Ein Öffnungsdruck zum Öffnen der Entlüftungsöffnung kann beispielsweise zumindest 2 mbar, vorteilhaft zumindest 5 mbar, vorzugsweise zumindest 7 mbar und besonders bevorzugt zumindest 20 mbar betragen. Fällt die Druckdifferenz auf einen bestimmten, insbesondere vordefinierten, Soll-Wert ab, kann sich das Aromaschutzventil wieder schließen, bevorzugt luftdicht verschließen, und damit ein Austreten von Gasen aus dem Innenraum und/oder ein Eintreten von Gasen aus der Umgebung des Verpackungsbehälters verhindern. Dadurch kann neben einem Kaputtgehen des Verpackungsbehälters auch ein Ausbeulen und/oder Aufblähen des Verpackungsbehälters verhindert werden. Ein Schließdruck zum Schließen der Entlüftungsöffnung kann beispielsweise zumindest 0,5 mbar, vorteilhaft zumindest 1 mbar, vorzugsweise zumindest 2 mbar und besonders bevorzugt zumindest 10 mbar betragen. Insbesondere sind der Öffnungsdruck und der Schließdruck miteinander gekoppelt und/oder stehen in Wirkverbindung miteinander.

Bei dem Aromaschutzventil kann es sich um ein innenliegendes und bevorzugt außenliegendes Aromaschutzventil handeln. Das innenliegende Aromaschutzventil kann zumindest teilweise und vorteilhaft vollständig in zumindest einer aus einem Verpackungsmaterial bestehenden Seitenwand des Verpackungsbehälters integriert und/oder angeordnet sein. Das innenliegende Aromaschutzventil kann bereits bei Herstellung des Verpackungsbehälters mithergestellt werden. Bei der Seitenwand kann es sich beispielsweise um eine Deckenwandung, Bodenwandung oder eine Wandung an einer anderen Seite des Verpackungsbehälters handeln. Vorzugsweise ist das außenliegende Aromaschutzventil unabhängig von dem Verpackungsbehälter, insbesondere in einem separaten Herstellungsprozess zu dem Verpackungsbehälter, ausgebildet und/oder hergestellt und/oder herstellbar. Das außenliegende Aromaschutzventil kann nachträglich, und zwar nach einer separaten Herstellung des Verpackungsbehälters und des Aromaschutzventils mit dem Verpackungsbehälter, insbesondere zumindest der Seitenwand, bevorzugt einer Außenwandung, des Verpackungsbehälters, verbunden und/oder daran angeordnet werden.

Vorzugsweise weist das außenliegende Aromaschutzventil eine, insbesondere selbstklebende, Haftfläche zur Anheftung und/oder Anordnung an dem Verpackungsbehälter, vorteilhaft an zumindest der Seitenwand des Verpackungsbehälters auf. Die Haftfläche kann Teil des Basiselements sein. Bevorzugt weist eine Unterseite des Basiselements, und zwar eine, insbesondere in einem verbundenen Zustand, der Ventilmembran abgewandte Seite des Basiselements, die Haftfläche zumindest teilweise auf. Insbesondere sind das Basiselement und die insbesondere flexible Ventilmembran Teil des Aromaschutzventils und bilden eine Unterbaugruppe des Aromaschutzventils aus. Zusätzlich kann das Aromaschutzventil noch weitere Elemente und/oder Einheiten aufweisen. Denkbar wäre jedoch auch, dass das Basiselement und die Ventilmembran das gesamte Aromaschutzventil ausbilden.

In dem Fügeprozess werden das Basiselement und die Ventilmembran zumindest abschnittsweise miteinander verbunden, und zwar mittels Energieeintragung. Die Energieeintragung kann direkt oder indirekt erfolgen. Vorteilhaft handelt es sich bei der Energieeintragung in dem Fügeprozess um eine extern von außen, und zwar mittels einer Energiequelle erzeugte und auf das Basiselement und/oder die Ventilmembran eingebrachte Energie. Bevorzugt erfolgt die Energieeintragung lokal, und zwar fokussiert auf und/oder in, insbesondere vordefinierten, Bereichen und/oder Abschnitten des Basiselements und/oder der Ventilmembran. Insbesondere wird in dem Fügeprozess Energie auf und/oder in zumindest einem Bereich und/oder zumindest einem Abschnitt des Basiselements und/oder der Ventilmembran eingebracht und/oder übertragen. Mittels der Energiequelle kann die Energieeintragung punktuell an dem Basiselement und/oder der Ventilmembran erfolgen. Bei der Energieeintragung kann es sich beispielsweise um eine Erwärmung, insbesondere eine lokale Erwärmung, zumindest eines Bereichs und/oder zumindest eines Abschnitts des Basiselements und/oder der Ventilmembran handeln. Beispielsweise kann zumindest der Bereich und/oder zumindest der Abschnitt des Basiselements und/oder der Ventilmembran in dem Fügeprozess erwärmt werden. Alternativ und/oder zusätzlich kann die Energieeintragung auch auf in dem Fügeprozess verwendete Geräte und/oder Bauteile erfolgen. Vorteilhaft weisen das Basiselement und die Ventilmembran nach dem Fügeprozess, insbesondere in dem verbundenen Zustand, jeweils einen verbundenen Abschnitt und einen unverbundenen Abschnitt auf. Denkbar wäre jedoch auch, dass das Basiselement und die Ventilmembran in dem Fügeprozess vollständig, insbesondere vollflächig, miteinander verbunden werden.

Vorteilhaft ist der unverbundene Abschnitt des Basiselements und der Ventilmembran dazu vorgesehen, bei ansteigendem Druck im Innenraum des Verpackungsbehälters Gase aus dem Innenraum entweichen zu lassen. Der unverbundene Abschnitt kann Teil der bereits genannten Entlüftungsöffnung sein oder diese ausbilden. Bevorzugt ist die Ventilmembran flexibel ausgestaltet, um einen Gasaustritt aus dem Innenraum des Verpackungsbehälters zu ermöglichen. Vorzugsweise dehnt sich die Ventilmembran bei ansteigendem Druck im Innenraum aus und kann in dem unverbundenen Abschnitt einen Öffnungskanal der Entlüftungsöffnung zum Entweichen der Gase aus dem Innenraum zumindest teilweise ausbilden. Fällt der Druck im Innenraum wieder ab, geht die Dehnung der Ventilmembran zurück, wodurch sich der Öffnungskanal wieder schließt. Der Öffnungskanal kann von dem Basiselement und zumindest der Ventilmembran zumindest teilweise begrenzt und/oder bildet sein.

In dem verbundenen Zustand kann zwischen dem Basiselement und der Ventilmembran zumindest abschnittsweise, insbesondere in zumindest dem unverbundenen Abschnitt, ein fluides Dichtmedium, wie beispielsweise Öl, angeordnet sein. Das Dichtmedium kann sich zwischen dem Basiselement und der Ventilmembran ausbreiten und eine gasdichte Barriere ausbilden. Insbesondere ist das Dichtmedium zur Abdichtung zumindest des unverbundenen Abschnitts des Basiselements und der Ventilmembran vorgesehen. Bevorzugt wird das Dichtmedium in einem separaten Prozess nach zumindest dem genannten Fügeprozess, und zwar zumindest nach Verbindung des Basiselements mit der Ventilmembran, insbesondere in zumindest dem unverbundenen Abschnitt zwischen dem Basiselement und der Ventilmembran eingebracht und/oder aufgetragen. Vorteilhaft wird das Dichtmedium auf eine Unterseite der Ventilmembran, und zwar eine dem Basiselement zugewandte Seite der Ventilmembran eingebracht und/oder aufgetragen. Alternativ und/oder zusätzlich kann das Dichtmedium auf eine Oberseite des Basiselements, und zwar einer der Ventilmembran zugewandten Seite des Basiselements eingebracht und/oder aufgetragen sein.

Überwindet der in dem Innenraum vorherrschende Druck die Adhäsionskräfte des Dichtmediums zur Ventilmembran, die Kohäsionskräfte des Fluidfilms und/oder übersteigt den in der Umgebung des Verpackungsbehälters atmosphärischen Druck, so kann sich die Ventilmembran, insbesondere in dem unverbundenen Abschnitt, zumindest teilweise und/oder zumindest abschnittsweise anheben und/oder wölben, um die Entlüftungsöffnung, und zwar zumindest den Öffnungskanal zum Entweichen der Gase ausbilden. Vorteilhaft wird dabei das Dichtmedium an die jeweiligen Seitenwände der Ventilmembran innerhalb des Öffnungskanals gedrückt und/oder verdrängt, um somit das Entweichen der Gase zu ermöglichen. Die Gase aus dem Innenraum können solange entweichen, bis die Druckdifferenz zwischen dem Innenraum und der Umgebung des Verpackungsbehälters auf einen bestimmten, insbesondere vordefinierten, Soll-Wert abgefallen ist, wobei sich anschließend die Entlüftungsöffnung wieder verschließt, und zwar die Ventilmembran wieder gasdicht mittels des Dichtmediums mit dem Basiselement abdichtet. Besonders bevorzugt ist das Dichtmedium dazu vorgesehen, einen Eintritt von Gasen aus der Umgebung, wie beispielsweise Sauerstoff, in einem geschlossenen Zustand der Entlüftungsöffnung, insbesondere des Öffnungskanals, sowie in einem geöffneten Zustand der Entlüftungsöffnung, insbesondere des Öffnungskanals, zu verhindern.

Unter "vorgesehen" soll hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Dadurch, dass das Basiselement und die Ventilmembran in dem Fügeprozess klebstofffrei miteinander verbunden werden, kann gerade durch eine Ersetzung, und zwar eine Vermeidung eines Klebstoffverbunds die Reduzierung oder Vermeidung von Fremdstoffen ermöglicht werden. Somit kann ein besonders sortenreines und gut recyclebares, ferner nachhaltiges Aromaschutzventil hergestellt und/oder bereitgestellt werden.

Vorteilhaft erfolgt die zumindest abschnittsweise Verbindung des Basiselements und der Ventilmembran unter Vermeidung von einem Klebstoff oder Klebstoffen, insbesondere eines Klebebands oder Klebebändern. Unter einem "Klebstoff' soll ein Stoff und/oder Element verstanden werden, welches dazu vorgesehen ist, eine stoffschlüssige Verbindung mit zumindest einem Objekt einzugehen. Der Klebstoff ist vorzugsweise ein nichtmetallischer Stoff, welcher dazu vorgesehen ist, zumindest zwei Elemente durch Oberflächenhaftung und seine innere Festigkeit zu verbinden.

Des Weiteren wird vorgeschlagen, dass das Basiselement und die Ventilmembran in einem kontinuierlichen Fügeprozess miteinander verbunden werden. Hierdurch kann ein besonders effizientes Herstellungsverfahren ermöglicht und vorteilhaft eine Vielzahl von Aromaschutzventilen effizient, und zwar schnell, komfortabel und/oder unkompliziert hergestellt werden. Damit kann eine Kosten- und/oder eine Produkt- und/oder eine Arbeitseffizienz weiter gesteigert werden.

Unter dem kontinuierlichen Fügeprozess soll der bereits genannte Fügeprozess verstanden werden, welcher bevorzugt kontinuierlich erfolgt. Zumindest das Aromaschutzventil kann auf dem Grundelement, insbesondere der Folienbahn, angeordnet und insbesondere auf Rollen gefertigt und/oder hergestellt und/oder gelagert werden. Bevorzugt ist die Unterseite des Basiselements, insbesondere die der Ventilmembran abgewandte Seite des Basiselements, mit dem Grundelement, insbesondere der Folienbahn, verbunden und/oder an dem Grundelement, insbesondere der Folienbahn, angeordnet. Die Haftfläche kann mit dem Grundelement, insbesondere der Folienbahn, verbunden sein. Das Basiselement, insbesondere die Unterseite des Basiselements, kann mittels der Haftfläche mit dem Grundelement, insbesondere der Folienbahn, verbunden sein. Das Grundelement, insbesondere die Folienbahn, ist erfindungsgemäß zu einer verbesserten Handhabung und/oder Stabilisierung des Basiselements und/oder der Ventilmembran während des Fügeprozesses und/oder einer effizienten, beispielsweise schnellen und/oder kontinuierlichen, Herstellung vorgesehen.

Denkbar wäre, dass das Basiselement klebstofffrei mit dem Grundelement verbunden ist. Alternativ kann das Basiselement zur Fixierung auf dem Grundelement zumindest abschnittsweise mittels eines Klebstoffs mit dem Grundelement verbunden sein. Das Grundelement kann steif und bevorzugt flexibel und/oder elastisch sein. Das Grundelement kann wiederholt verformbar sein, ohne dass dadurch das Grundelement mechanisch beschädigt oder zerstört wird, wobei das Grundelement insbesondere nach einer Verformung selbstständig wieder in eine Grundform zustrebt. Insbesondere ist das Grundelement biegsam. Vorzugsweise ist in einem Applikationsprozess zumindest das Aromaschutzventil auf dem Verpackungsbehälter anordenbar, insbesondere klebbar. In dem Applikationsprozess kann das Aromaschutzventil mittels der Haftfläche auf den Verpackungsbehälter geklebt werden. Insbesondere erfolgt der Applikationsprozess hinsichtlich eines zeitlichen Verlaufs nach zumindest dem Fügeprozess.

Vorzugsweise umfasst das Verfahren eine Herstellung von einer Vielzahl an Aromaschutzventilen, insbesondere außenliegenden Aromaschutzventilen. Die Vielzahl von Aromaschutzventilen können auf dem Grundelement, vorteilhaft der Folienbahn, insbesondere nebeneinander, beispielsweise in einer Reihe hintereinander, angeordnet sein. Die Vielzahl von Aromaschutzventilen können auf Rollen gefertigt werden. Vorteilhaft werden in dem kontinuierlichen Fügeprozess die Vielzahl von Aromaschutzventilen nacheinander hergestellt. In dem Fügeprozess könnten das Grundelement, eine Vielzahl von Basiselementen, insbesondere eine Basiselementbahn, und eine Vielzahl von Ventilmembranen, insbesondere eine Ventilmembranbahn, kontinuierlich durch zumindest eine Maschine und/oder eine Einheit geführt und/oder geleitet werden, welche zur Herstellung der Aromaschutzventile, und zwar zumindest zur Verbindung der Basiselemente mit den Ventilmembranen vorgesehen ist. Vorteilhaft sind die Basiselemente bereits vorgestanzt und/oder vorgeschnitten und insbesondere einzeln auf dem Grundelement angeordnet. Zusätzlich könnten die Ventilmembranen vorgestanzt und/oder vorgeschnitten und insbesondere einzeln auf den Basiselementen zumindest teilweise angeordnet sein. Vorzugsweise handelt es sich um eine Ventilmembranbahn, welche zumindest teilweise auf den Basiselementen und/oder zumindest teilweise dem Grundelement angeordnet ist und in dem Fügeprozess, insbesondere dem kontinuierlichen Fügeprozess, mit dem Basiselement und insbesondere zusätzlich zumindest abschnittsweise mit dem Grundelement, vorteilhaft jeweils zwischen zumindest zwei Basiselementen, verbunden wird.

In dem Applikationsprozess könnten die Aromaschutzventile mittels ihrer Haftfläche auf Verpackungsbehälter geklebt werden. Die Aromaschutzventile können in dem Applikationsprozess von dem Grundelement entfernt werden. Nach zumindest dem Fügeprozess und vor dem Applikationsprozess könnten in einem Schneideprozess die Aromaschutzventile jeweils ausgestanzt und/oder ausgeschnitten werden, um insbesondere einzeln mit jeweils einem Verpackungsbehälter verbunden werden können.

Zudem wird vorgeschlagen, dass das Basiselement und die Ventilmembran in dem Fügeprozess entlang zumindest einer Fügenaht miteinander verbunden werden. Damit kann eine Fügung eines Basiselements und einer Ventilmembran eines Aromaschutzventils optimiert, und zwar effizienter gestaltet werden. Zudem kann eine Dichtigkeit und/oder Fügestärke, folglich eine Langlebigkeit des Aromaschutzventils gesteigert und/oder verlängert werden.

Insbesondere ist die Fügenaht in dem verbundenen Abschnitt angeordnet oder bildet diesen aus. Das Basiselement und die Ventilmembran werden erfindungsgemäß in dem Fügeprozess auf dem Grundelement miteinander verbunden, wobei vorteilhaft die Fügenaht lediglich das Basiselement und die Ventilmembran miteinander verbindet. Vorteilhaft ist die Fügenaht zumindest ein Resultat der Energieeintragung in dem Fügeprozess. Das Basiselement und die Ventilmembran können in dem Fügeprozess in und/oder mittels der Fügenaht stoffschlüssig miteinander verbunden werden. Bevorzugt sind das Basiselement und die Ventilmembran nach dem Fügeprozess in und/oder mittels der Fügenaht stoffschlüssig miteinander verbunden. Die Fügenaht kann sich zumindest abschnittsweise entlang einer Längserstreckung des Grundelements, insbesondere der Folienbahn, erstrecken. Vorteilhaft erstreckt sich die Fügenaht über eine gesamte Längserstreckung des Grundelements. Die Fügenaht kann zumindest im Wesentlichen parallel zu zumindest einer Kante des Grundelements, vorteilhaft zumindest einer Längskante des Grundelements, angeordnet sein. Unter "im Wesentlichen parallel" soll hier eine Ausrichtung einer Richtung relativ zu einer Bezugsrichtung, insbesondere in einer Ebene, verstanden werden, wobei die Richtung gegenüber der Bezugsrichtung eine Abweichung kleiner als 8°, vorteilhaft kleiner als 5° und besonders vorteilhaft kleiner als 2° aufweist. Ferner soll darunter verstanden werden, dass die Richtung zu der Bezugsrichtung parallel ausgerichtet und/oder angeordnet ist, und zwar abgesehen von Fertigungstoleranzen und/oder im Rahmen von genormten Toleranzen.

In dem kontinuierlichen Fügeprozess kann die Fügenaht bevorzugt durchgehend entlang der gesamten Längserstreckung des Grundelements, insbesondere der Folienbahn, erzeugt werden. Bei Herstellung der Vielzahl von Aromaschutzventilen können die Basiselemente und die Ventilmembranen, insbesondere die Ventilmembranbahn, durchgehend entlang der Fügenaht miteinander verbunden werden. Insbesondere erstreckt sich die Fügenaht zumindest abschnittsweise entlang einer Längserstreckung der Ventilmembranen, insbesondere der Ventilmembranbahn, und vorteilhaft vollständig über eine gesamte Längserstreckung der Ventilmembranen, insbesondere der Ventilmembranbahn. Bevorzugt ist zumindest eine Kante, insbesondere eine Längskante, der Ventilmembranen, insbesondere der Ventilmembranbahn, zumindest im Wesentlichen parallel zu zumindest der Längskante des Grundelements angeordnet. Die Fügenaht kann eine Breitenerstreckung von beispielsweise zumindest 0,2 mm, vorteilhaft zumindest 0,5 mm, vorzugsweise zumindest 1 mm und vorzugsweise von höchstens 5 mm und besonders bevorzugt höchstens 3 mm aufweisen.

Unter einer "Längserstreckung" eines Objekts soll in diesem Zusammenhang eine Erstreckung des Objekts in eine Längserstreckungsrichtung des Objekts verstanden werden. Die "Längserstreckungsrichtung" des Objekts ist eine Richtung, welche parallel zu einer längsten Kante und/oder Seite eines kleinsten das Objekt gerade noch umschließenden, insbesondere gedachten, Quaders ausgerichtet ist. Ferner soll unter einer "Breitenerstreckung" eines Objekts in diesem Zusammenhang eine Erstreckung des Objekts in eine Breitenerstreckungsrichtung des Objekts verstanden werden. Die "Breitenerstreckungsrichtung" des Objekts ist eine Richtung, welche parallel zu einer zweitlängsten Kante und/oder Seite eines, insbesondere des genannten, kleinsten, das Objekt gerade noch umschließenden, insbesondere gedachten, Quaders ausgerichtet ist.

Wenn das Basiselement zumindest eine Öffnung aufweist und in dem Fügeprozess das Basiselement mit der Ventilmembran entlang zumindest zweier Fügenähten auf gegenüberliegenden Seiten der Öffnung miteinander verbunden werden, kann eine Dichtigkeit und/oder Fügestärke, folglich eine Langlebigkeit eines Aromaschutzventils verlängert und/oder weiter gesteigert werden. Zudem kann ein effizientes Herstellungsverfahren bereitgestellt werden.

Vorzugsweise sind die zwei genannten Fügenähte identisch zueinander ausgebildet und/oder erzeugt, sodass eine Beschreibung der bereits genannten Fügenaht auf alle weiteren Fügenähte übertragen werden kann. Mit der Formulierung "identische Objekte" sind in diesem Zusammenhang Objekte gemeint, die vorteilhafterweise die gleiche Struktur und/oder Form und/oder Außenkontur und/oder Bauart und/oder Ausgestaltung und/oder zumindest zu einem Großteil und bevorzugt vollständig die gleiche Materialzusammensetzung aufweisen, sich aber hinsichtlich ihrer Funktionalität, ihres inneren Aufbaus, ihrer Anordnung an einem anderen Objekt und/oder ihrer Ausrichtung bezüglich eines anderen Objekts zumindest teilweise unterscheiden können. Vorzugsweise sind die identischen Objekte jedoch abgesehen von Fertigungstoleranzen und/oder im Bereich von genormten Toleranzen identisch.

Besonders bevorzugt sind die beiden Fügenähte zumindest im Wesentlichen parallel zueinander ausgerichtet und/oder angeordnet. Die Fügenähte könnten jeweils einen unterschiedlichen Abstand zu der Öffnung des Basiselements aufweisen. Ferner könnten die Fügenähte untereinander den gleichen Abstand zu der Öffnung aufweisen und/oder jeweils in einem gleichen Abstand zu der Öffnung angeordnet sein. Vorteilhaft sind die Fügenähte identisch zu der Öffnung beabstandet. Der Abstand zwischen der Öffnung, und zwar einem Rand, insbesondere einem äußeren Rand, der Öffnung und zumindest einem der Fügenähte, bevorzugt zu beiden Fügenähten, kann zumindest 1 mm, vorteilhaft zumindest 3 mm, vorzugsweise zumindest 5 mm und insbesondere höchstens 20 mm sowie besonders bevorzugt höchstens 10 mm aufweisen. Ferner könnte ein Abstand zwischen den beiden Fügenähten zumindest 5 mm, vorteilhaft zumindest 10 mm, vorzugsweise zumindest 15 mm und besonders bevorzugt höchstens 20 mm betragen.

Insbesondere ist die Öffnung Teil der Entlüftungsöffnung. Die aus dem Innenraum des Verpackungsbehälters strömende Luft, insbesondere wenn das Aromaschutzventil an dem Verpackungsbehälter angeordnet ist, kann durch die Öffnung des Basiselements gegen zumindest die Ventilmembran drücken, insbesondere bis diese sich verformt und/oder anhebt und der Öffnungsdruck groß genug ist, um die Entlüftungsöffnung vollständig zu öffnen. Denkbar wäre auch, dass das Basiselement mehrere, insbesondere kleine, Öffnungen aufweist. Eine Ausgestaltung der Öffnung, und zwar die Öffnungsgeometrie, insbesondere eine Größe und/oder Form und/oder Lage, kann abhängig von dem verwendeten Material des Basiselements und deren Eigenschaften und/oder von der Verwendung und/oder Anordnung an bestimmten Verpackungsbehältern und/oder der Verwendung bei unterschiedlichen Füllgütern sein. Bevorzugt ist die Öffnung derart ausgebildet, dass ein gleichmäßiges und/oder reversibles und/oder reproduzierbares Öffnungs- und Schließverhältnis, insbesondere ein Öffnungs- und/oder Schließdruck, vorliegt. Die Öffnung könnte in einer Draufsicht eine zumindest abschnittsweise runde und/oder eckige Form aufweisen. Beispielsweise könnte die Öffnung in der Draufsicht eine kreisförmige oder eine Kleeblatt-, insbesondere dreiblättrige oder vierblättrige Kleeblatt-, Form aufweisen. Denkbar wäre auch, dass die Form der Öffnung in der Draufsicht einer liegenden Acht gleicht. Insbesondere ist durch eine Änderung und/oder andersartige Ausgestaltung der Öffnung, und zwar der Öffnungsgeometrie der Öffnung, das Öffnungs- und Schließdruckverhalten, insbesondere der Öffnungs- und Schließdruck, beeinflussbar.

Ferner könnte das Basiselement in einer Draufsicht eine eckige oder runde Form und/oder Außenkontur aufweisen. Vorteilhaft weist das Basiselement in der Draufsicht eine viereckige Form auf, wobei die Ecken des Verdecks bevorzugt jeweils abgerundet sind. Das Basiselement könnte eine zu einer Breitenerstreckung unterschiedlich lange Längserstreckung aufweisen. Alternativ, und zwar bevorzugt weist das Basiselement zueinander identisch lange Längs- und Breitenerstreckungen auf. Die Längs- und/oder die Breitenerstreckungen könnten zumindest 10 mm, vorteilhaft zumindest 20 mm und besonders bevorzugt zumindest 30 mm aufweisen. Eine Dicke und/oder Materialstärke des Basiselements könnte zumindest 20 µm, vorteilhaft zumindest 0,1 mm, vorzugsweise zumindest 0,5 mm, insbesondere höchstens 1 mm und besonders bevorzugt höchstens 0,8 mm aufweisen. Eine Dicke und/oder Materialstärke der Ventilmembran könnte zumindest 10 µm, vorteilhaft zumindest 50 µm, vorzugsweise zumindest 0,3 mm, insbesondere höchstens 1 mm und besonders bevorzugt höchstens 0,8 mm aufweisen.

Um eine besonders gute sowie stabile Fügung und/oder Verbindung zumindest eines Basiselements und einer Ventilmembran zu ermöglichen und damit eine Effizienz hinsichtlich eines Herstellungsverfahrens eines Aromaschutzventils weiter zu steigern, wird vorgeschlagen, dass das Basiselement und/oder die Ventilmembran in dem Fügeprozess erwärmt wird/werden. Insbesondere wird mittels der Energieeintragung das Basiselement und/oder die Ventilmembran in dem Fügeprozess erwärmt. Die Verbindung, und zwar das Fügen des Basiselements und der Ventilmembran kann durch direkten oder indirekten, insbesondere mittel- oder unmittelbaren, Wärmeeintrag realisiert werden. Bevorzugt handelt es sich um eine lokale Erwärmung des Basiselements und/oder der Ventilmembran. Das Basiselement und/oder die Ventilmembran könnten lediglich lokal im Bereich zumindest einer der Fügenähte, insbesondere jeweils im Bereich beider Fügenähte, erwärmt werden, und zwar vorzugsweise kurzzeitig, beispielsweise für höchstens 5 s, vorteilhaft für höchstens 3 s und besonders vorteilhaft für höchstens 1 s. Denkbar wäre auch, dass zusätzlich das Grundelement zumindest abschnittsweise in dem Fügeprozess erwärmt wird.

Das Basiselement und die Ventilmembran könnten in dem Fügeprozess beispielsweise mittels einer Schweißung und/oder einer Siegelung und/oder einer Verschmelzung und/oder einem anderen, einem Fachmann als sinnvoll erscheinenden Prozess/Verfahren stoffschlüssig miteinander verbunden werden. Bevorzugt werden das Basiselement und die Ventilmembran in dem Fügeprozess dauerhaft, und zwar untrennbar miteinander verbunden, wobei das Basiselement und die Ventilmembran insbesondere lediglich unter einer zumindest teilweisen Zerstörung wieder voneinander getrennt werden könnten.

Denkbar wäre, dass das Basiselement und die Ventilmembran in dem Fügeprozess mittels Laserstrahlschweißen und/oder mittels indirektem Heizelementschweißen und/oder Reibschweißen und/oder Vibrationsschweißen und/oder Hochfrequenzschweißen zumindest abschnittsweise miteinander verbunden werden. In einer bevorzugten erfindungsgemäßen Ausgestaltung der Erfindung werden das Basiselement und die Ventilmembran in dem Fügeprozess zumindest abschnittsweise mittels einer Ultraschallschweißung verbunden. Dadurch kann eine hohe Effizienz bei der Herstellung von Aromaschutzventilen erreicht werden. Zudem kann ohne weitere Zusatzstoffe und/oder Verbindungsmaterialien zumindest eine saubere und/oder stabile Fügenaht erzeugt werden. Damit kann wiederum eine Recyclebarkeit des Aromaschutzventils verbessert werden.

Bevorzugt wird die Ultraschallschweißung in dem Fügeprozess angewendet, wenn das Basiselement und/oder die Ventilmembran aus Mono-Materialien, wie beispielsweise Mono-PE oder Mono-PP ausgebildet ist/sind. Insbesondere werden beim Ultraschallschweißen das Basiselement und die Ventilmembran unter Einwirkung mechanischer Energie eines hochfrequenten Schalls erwärmt und durch Aufschmelzen ihres Materials gefügt. Die Erwärmung kann durch die in Bewegung gesetzten Moleküle erzeugt werden. Zumindest eine der Fügenähte, insbesondere beide Fügenähte, können in dem Fügeprozess durch Aneinanderpressen einer Ultraschall-Sonotrode auf einen in Höhenrichtung betrachtet unterhalb der Ultraschall-Sonotrode angeordneten Amboss erzeugt und/oder hergestellt werden. Denkbar wäre, dass die Ultraschall-Sonotrode und/oder der Amboss stehend, bevorzugt frei von rollenden Bewegungen, angeordnet ist/sind und stehend in dem Fügeprozess eingesetzt wird/werden. Die Ultraschall-Sonotrode könnte sich getaktet in Höhenrichtung auf und ab relativ zu dem Amboss bewegen.

Um eine Effizienz bei Herstellung eines Aromaschutzventils weiter zu steigern und einen kontinuierlichen Fügeprozess zu realisieren, wird vorgeschlagen, dass das Basiselement und die Ventilmembran in dem Fügeprozess zumindest abschnittsweise mittels einer Ultraschall-Rollnahtschweißung verbunden werden. Damit kann zudem neben einer getakteten Ultraschallschweißung eine Ultraschall-Rollnahtschweißung zur Fügung bereitgestellt und somit ein besonders effizienter kontinuierlicher Fügeprozess bereitgestellt und/oder ermöglicht werden, wobei gerade auf prozessstörende Taktpausen verzichtet werden kann. Des Weiteren können Herstellungszeiten und/oder ein Herstellungsaufwand verringert werden.

Vorzugsweise ist/sind die Ultraschall-Sonotrode und/oder der Amboss rollend angeordnet und/oder dazu vorgesehen, in zumindest dem Fügeprozess zumindest eine rollende Bewegung auszuführen. Möglicherweise könnte entweder der Amboss oder die Ultraschall-Sonotrode rollend angeordnet sein und/oder eine rollende Bewegung in dem Fügeprozess ausführen, wobei jeweils das andere Objekt, und zwar der Amboss oder die Ultraschall-Sonotrode stehend angeordnet sein könnte. Besonders bevorzugt sind sowohl der Amboss als auch die Ultraschall-Sonotrode rollend angeordnet. Vorteilhaft ist die Ultraschall-Sonotrode auch als Rollsonotrode, Rollnahtsonotrode und/oder Rotationssonotrode bezeichenbar. Die Ultraschall-Sonotrode könnte sich beispielsweise gegen den Uhrzeigersinn und der Ambos im Uhrzeigerinn oder andersrum drehen.

Des Weiteren wäre auch denkbar, dass das Basiselement und die Ventilmembran in dem Fügeprozess zumindest abschnittsweise mittels einer Siegelung miteinander verbunden werden. Die Siegelung könnte in dem Fügeprozess angewendet werden, wenn das Basiselement und/oder die Ventilmembran aus mehrschichtigen Folien und/oder einem Verbundmaterial besteht. Ferner kann die Siegelung, insbesondere analog zum Schweißen, zusätzlich angewendet werden, wenn das Basiselement und/oder die Ventilmembran aus Mono-Materialien, wie beispielsweise Mono-PE oder Mono-PP ausgebildet ist/sind. Bei der Siegelung könnte es sich beispielsweise um eine Siegelung über Induktion und/oder eine Watttron-Siegelung handeln.

In einer alternativen oder zusätzlichen Ausgestaltung ist denkbar, dass das Basiselement und die Ventilmembran in dem Fügeprozess zumindest abschnittsweise mittels einer Wärmekontaktsiegelung verbunden werden. Damit kann eine besonders starke Fügung und/oder Verbindung von einem Basiselement und einer Ventilmembran erzeugt und/oder bereitgestellt werden. Hierdurch kann wiederum eine Langlebigkeit und/oder eine Flexibilität in einer Einsetzbarkeit eines Aromaschutzventils gesteigert werden. Zudem kann ein besonders effizientes Herstellungsverfahren bereitgestellt werden.

Vorteilhaft können bei der Wärmekontaktsiegelung in dem Fügeprozess zumindest eine beheizte Siegelbacke und vorzugsweise zwei beheizte Siegelbacken mit insbesondere einem vordefinierten Druck und/oder einer vordefinierten Siegelzeit zusammengedrückt werden, wobei zwischen den Siegelbacken das zu siegelnde Material, und zwar das Basiselement und zumindest die Ventilmembran, angeordnet sind. Die Wärmekontaktsiegelung kann getaktet erfolgen, wobei der Takt bevorzugt über eine Schmelztemperatur des Materials, aus welchem das Basiselement und/oder die Ventilmembran ausgebildet sind, bestimmt oder berechnet ist. Die Siegelbacken können Formgebungen und/oder Ausgestaltungen aufweisen. Vorzugsweise sind mittels der Formgebung und/oder Ausgestaltung der Siegelbacken eine intermolekulare Verbindung und/oder Fügung des Basiselements und der Ventilmembran mit gewünschten Eigenschaften im Bereich der Form, Steifigkeit, Siegelnahtfestigkeit und/oder Dichtigkeit beinflussbar und/oder einstellbar und/oder erzeugbar und/oder auswählbar. Bei einer Wärmekontaktsiegelung kann der Energieeintrag, und zwar der Wärmeeintrag von außen, bevorzugt von zumindest einer der Siegelbacken erfolgen. Insbesondere sind die beheizten Siegelbacken auf gegenüberliegenden Seiten des Basiselements und die Ventilmembran angeordnet und werden in dem Fügeprozess mit einem Anpressdruck zusammengedrückt, sodass das Basiselement und die Ventilmembran miteinander verbunden, und zwar versiegelt werden. Vorteilhaft werden das Basiselement und der Ventilmembran an zumindest einer Siegelstelle in dem Fügeprozess miteinander versiegelt. Löst sich der Anpressdruck bzw. nimmt der Anpressdruck ab, findet ein Abkühlungsprozess, insbesondere bis auf Raumtemperatur, des Basiselements und der Ventilmembran an der Siegelstelle statt. Je nach Dichtigkeitsanforderungen des Aromaschutzventils kann in einer Stärke und/oder Dauer des Anpressdrucks variiert werden.

Das Basiselement und zumindest die Ventilmembran könnten aus unterschiedlichen Materialien und/oder Materialzusammensetzungen ausgebildet sein. Alternativ und zwar vorzugsweise sind das Basiselement und zumindest die Ventilmembran zumindest teilweise, vorteilhaft zumindest zu einem Großteil oder vollständig, aus dem gleichen Material und/oder der gleichen Materialzusammensetzung ausgebildet. Dadurch kann ein Verfahren zur Herstellung zumindest eines Aromaschutzventils weiter optimiert und eine besonders hohe Sortenreinheit des Aromaschutzventils ermöglicht werden. Damit kann ein besonders nachhaltiges Aromaschutzventil bereitgestellt und/oder hergestellt werden. Ferner kann eine Recyclebarkeit des Aromaschutzventils weiter verbessert werden.

Unter dem Ausdruck "zu einem Großteil" sollen vorliegend beispielsweise zumindest 55 %, vorteilhaft zumindest 65 %, vorzugsweise zumindest 75 %, besonders bevorzugt zumindest 85 % und besonders vorteilhaft höchstens 95 % eines Flächen- und/oder Volumen- und/oder Massenanteils verstanden werden. Beispielsweise könnten das Basiselement und/oder zumindest die Ventilmembran zumindest teilweise und vorteilhaft zumindest zu einem Großteil aus nachwachsenden Rohstoffen hergestellt und/oder ausgebildet sein. Unter "nachwachsenden Rohstoffen" sollen hierbei organische Rohstoffe, insbesondere pflanzliche Rohstoffe, welche aus land- und/oder forstwirtschaftlicher Produktion stammen und vom Menschen zielgerichtet für weiterführende Anwendungszwecke außerhalb der Nahrungs- und Futtermittelindustrie angebaut werden oder bei welchen es sich um Nebenprodukte und/oder Abfallprodukte aus der Landwirtschaft und/oder der Nahrungs- und Futtermittelindustrie handelt, verstanden werden. Nachwachsende Rohstoffe im Sinne der vorliegenden Anmeldung sind ausschließlich organische Rohstoffe, welche nicht fossilen Ursprungs sind. Vorzugsweise handelt es sich bei nachwachsenden Rohstoffen vorliegend um heimische Produkte aus land- und/oder forstwirtschaftlicher Produktion sowie deren Nebenprodukte und/oder Reststoffe, sofern diese nicht dem Abfallrecht unterliegen, sowie um Algen.

Ferner könnten das Basiselement und/oder zumindest die Ventilmembran zumindest teilweise und vorteilhaft zumindest zu einem Großteil aus einem Mineral, einem Metall, Kunststoff und/oder einem Verbundmaterial ausgebildet sein. Um eine Langlebigkeit, flexiblere Einsetzbarkeit und/oder eine Recyclebarkeit eines Aromaschutzventils weiter zu optimieren und/oder bereitzustellen, wird vorgeschlagen, dass als Basiselement zumindest teilweise thermoplastischer Kunststoff verwendet wird. Zudem kann ein Herstellungsverfahren zumindest eines Aromaschutzventils effizienter gestaltet werden, da ein thermoplastischer Kunststoff, bevorzugt PP Materialien, sehr hitzebeständig ist und/oder gute mechanische Eigenschaften, wie beispielsweise in der Zugfestigkeit und/oder Reißdehnung, aufweist. Zudem kann mittels einer Ausgestaltung eines Basiselements und vorzugsweise einer Ventilmembran aus thermoplastischem Kunststoff ein Feuchtigkeitseintritt bei geschlossenem Aromaschutzventil verhindert werden.

Bei dem thermoplastischen Kunststoff kann es sich beispielsweise um Polypropylen (PP), Polyethylen (PE), Polyvinylchlorid (PVC) oder Polyethylenterephthalat (PET) handeln. Vorzugsweise ist der thermoplastische Kunststoff zu einem Einsatz in der Lebensmittelindustrie und zu einem Verwenden bei Lebensmitteln, und zwar Lebensmittelverpackungen geeignet und/oder vorgesehen. Bevorzugt besteht das Basiselement aus Mono-PP oder Mono-PE. Dadurch kann eine sortenreines Aromaschutzventil bereitgestellt und/oder hergestellt werden. Vorteilhaft ist die Ventilmembran zusätzlich aus thermoplastischem Kunststoff ausgebildet. Bevorzugt besteht die Ventilmembran aus Mono-PP oder Mono-PE. Alternativ und/oder zusätzlich kann das Grundelement aus thermoplastischem Kunststoff ausgebildet sein.

Besonders bevorzugt handelt es sich bei dem thermoplastischen Kunststoff um ein orientiertes Material. Das Basiselement und/oder die Ventilmembran könnten beispielsweise aus zumindest einer biaxial orientierten PP-Folie (BOPP) ausgebildet und/oder hergestellt sein.

Ferner wird vorgeschlagen, dass das Basiselement und die Ventilmembran zumindest im Wesentlichen gleiche Ausdehnungseigenschaften aufweisen. Dadurch kann eine Langlebigkeit, flexiblere Einsetzbarkeit, eine Zugfestigkeit und/oder Reißdehnung eines Aromaschutzventils optimiert werden. Zudem kann eine Herstellung des Aromaschutzventils weiter verbessert und eine Fügequalität eines Basiselements und einer Ventilmembran gesteigert werden.

Wenn das Basiselement und die Ventilmembran nach Fügung zumindest im Wesentlichen horizontal von einem Fügebereich weggeführt werden, kann eine Fügequalität weiter gesteigert und eine Wellenbildung und/oder Wölbung und/oder Unebenheiten von Material, und zwar des Basiselements und der Ventilmembran reduziert und/oder verhindert werden. Zudem können Störstellen und/oder Ungenauigkeiten und/oder Unebenheiten bei der Fügung in einem Fügeprozess reduziert und/oder verhindert werden. Hierdurch kann wiederum eine Dichtigkeit und/oder Langlebigkeit eines Aromaschutzventils gesteigert werden. Des Weiteren kann eine Effizienz bei Herstellung zumindest des Aromaschutzventils gesteigert werden.

Insbesondere befindet sich der Fügebereich zwischen der Ultraschall-Sonotrode und dem Amboss und/oder zwischen zumindest den zwei beheizten Siegelbacken. Unter "zumindest im Wesentlichen" soll in diesem Zusammenhang verstanden werden, dass eine Abweichung von einem vorgegebenen Wert und/oder einer Ausrichtung weniger als 25 %, vorzugsweise weniger als 10 % und besonders bevorzugt weniger als 1 % des vorgegebenen Werts und/oder der Ausrichtung beträgt. Mittels einer Veränderung und/oder Anpassung einer Bahnführung nach der Fügung ausgehend von dem Fügebereich könnte zusätzlich eine Fügequalität in dem Fügebereich beeinflussbar sein.

Zudem wird vorgeschlagen, dass zumindest ein Funktionselement des Aromaschutzventils in einem weiteren Fügeprozess auf einer dem Basiselement abgewandten Seite der Ventilmembran mit der Ventilmembran verbunden wird. Dadurch kann eine Dichtigkeit, Lebensdauer, Langlebigkeit und/oder flexiblere Einsetzbarkeit eines Aromaschutzventils gesteigert werden. Ferner kann das Aromaschutzventil beispielsweise bei einem Verpackungs-, einem Transport- und/oder einem Ausgabeprozess geschützt und ein unkontrolliertes Verbiegen und/oder Knicken des Aromaschutzventils verhindert werden. Außerdem kann ein besonders effizientes Herstellungsverfahren bereitgestellt werden.

Das Funktionselement kann dazu vorgesehen sein, eine Festigkeit und/oder Steifigkeit des Aromaschutzventils zu erhöhen und/oder zu verbessern. Das Funktionselement kann als ein Abstandshalter, insbesondere Abstandshalterstreifen, ausgebildet sein. Insbesondere ist der Abstandshalter dazu vorgesehen, die Ventilmembran und/oder das Basiselement zu schützen, bevorzugt vor einem Zerdrücken und/oder Kaputtgehen und/oder Zerreißen, beispielsweise aufgrund eines Zusammenstoßes mit weiteren Verpackungsbehältern oder anderweitigen Objekten. Denkbar wäre, dass das Aromaschutzventil weitere Funktionselemente aufweist, welche möglicherweise unterschiedlich oder identisch zu dem bereits genannten Funktionselement ausgebildet sind. Vorteilhaft sind zumindest zwei Funktionselemente auf der dem Basiselement abgewandten Seite der Ventilmembran mit der Ventilmembran verbunden.

Hinsichtlich des zeitlichen Verlaufs kann der weitere Fügeprozess nach dem Fügeprozess erfolgen. Alternativ wäre jedoch auch denkbar, dass der weitere Fügeprozess hinsichtlich des zeitlichen Verlaufs vor dem Fügeprozess erfolgt. Der weitere Fügeprozess könnte sich von dem bereits genannten Fügeprozess unterscheiden. Beispielsweise könnte in dem weiteren Fügeprozess das Funktionselement klebend, beispielsweise mittels einer Klebefolie und/oder eines Klebstreifens, mit der Ventilmembran, und zwar auf der dem Basiselement abgewandten Seite der Ventilmembran mit der Ventilmembran verbunden werden. Bevorzugt wird das Funktionselement mit einer analogen Fügemethodik mit der Ventilmembran verbunden, wie die Ventilmembran mit dem Basiselement verbunden ist. Insbesondere sind der weitere Fügeprozess und der Fügeprozess hinsichtlich ihrer Fügemethodik identisch. Das Funktionselement kann in dem weiteren Fügeprozess zumindest abschnittsweise mittels Ultraschallschweißung, bevorzugt der Ultraschall-Rollnahtschweißung, und/oder mittels Wärmekontaktsiegelung mit der Ventilmembran verbunden werden.

Das erfindungsgemäße Aromaschutzventil und/oder das erfindungsgemäße Verfahren soll/sollen hierbei nicht auf die oben beschriebene Anwendung und Ausführungsform beschränkt sein. Insbesondere kann/können das erfindungsgemäße Aromaschutzventil und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Aromaschutzventil nach einer Herstellung, welches als ein außenliegendes Aromaschutzventil ausgebildet ist,
- Fig. 2: eine Schnittdarstellung des an einem Verpackungsbehälter angeordneten erfindungsgemäßen Aromaschutzventils in einem geschlossenen Zustand des Aromaschutzventils,
- Fig. 3: eine Explosionsdarstellung des erfindungsgemäßen Aromaschutzventils und eines Grundelements, auf welchem zumindest ein Basiselement des erfindungsgemäßen Aromaschutzventils bei der Herstellung des erfindungsgemäßen Aromaschutzventils, und zwar zumindest in einem Fügeprozess zur Fügung/Verbindung des Basiselements mit einer Ventilmembran des erfindungsgemäßen Aromaschutzventils, angeordnet ist,
- Fig. 4: eine Draufsicht auf das Grundelement nach dem Fügeprozess, wobei auf dem Grundelement eine Vielzahl von Basiselementen und eine die Basiselemente überdeckende Ventilmembranbahn angeordnet sind,
- Fig. 5: eine Schnittdarstellung durch das Grundelement, das Basiselement und die Ventilmembran vor dem Fügeprozess mit einer Darstellung einer Anordnung von Fügenähten, entlang welchen das Basiselement und die Ventilmembran in dem Fügeprozess miteinander verbunden werden,
- Fig. 6: eine schematische Darstellung des Fügeprozesses, in welchem das Basiselement und die Ventilmembran zumindest abschnittsweise mittels einer Ultraschallschweißung verbunden werden,
- Fig. 7: eine Seitenansicht eines Wegführens des Basiselements, der Ventilmembran und zumindest des Grundelements aus einem Fügebereich nach dem Fügeprozess,
- Fig. 8: ein schematisches Verfahrensfließbild des erfindungsgemäßen Verfahrens zur Herstellung zumindest des erfindungsgemäßen Aromaschutzventils und
- Fig. 9: eine weitere Ausführung und Ausgestaltung eines Fügeprozesses, in welchem ein Basiselement und eine Ventilmembran eines Aromaschutzventils zumindest abschnittsweise mittels einer Wärmekontaktsiegelung verbunden werden.

### Beschreibung der Ausführungsbeispiele

Nachfolgend handelt es sich bei den vorliegenden Figuren um schematische und nicht maßstabsgetreue Darstellungen. Wenn nicht anders angegeben, ist von mehrfach vorhandenen Objekten lediglich eins mit einem Bezugszeichen versehen.

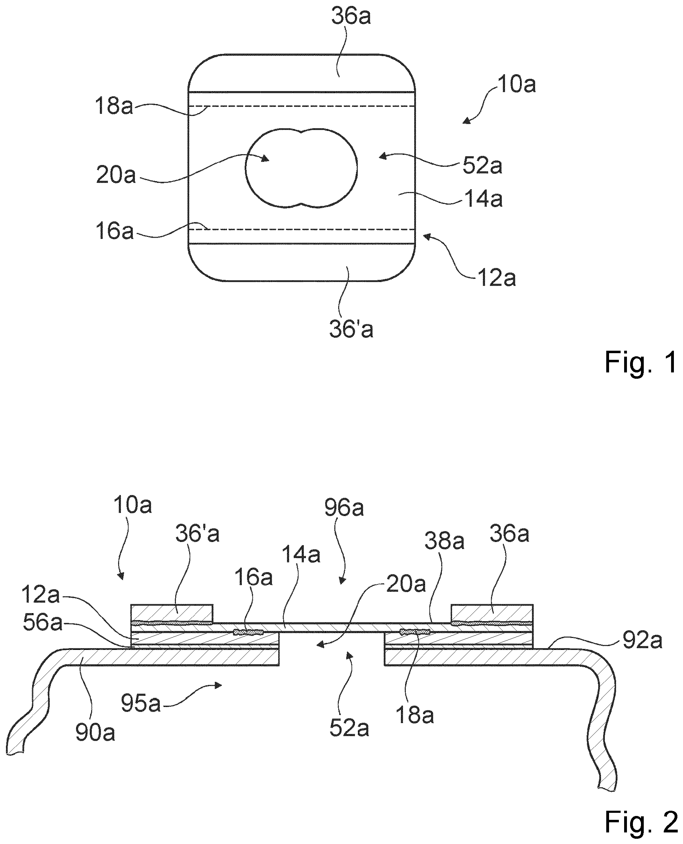

Die Figur 1 zeigt ein hergestelltes Aromaschutzventil 10a für einen Verpackungsbehälter 90a, welches vorliegend als ein außenliegendes Aromaschutzventil ausgebildet ist. Alternativ könnte das Aromaschutzventil 10a auch als ein innenliegendes Aromaschutzventil ausgebildet sein. Das Aromaschutzventil 10a ist dazu vorgesehen, für einen Druckausgleich in dem Verpackungsbehälter 90a zu sorgen und den Verpackungsbehälter 90a vor einem Platzen und/oder Kaputtgehen zu schützen sowie in dem Verpackungsbehälter 90a enthaltene Aromastoffe ausgehend von zumindest einem Füllgut in dem Verpackungsbehälter 90a zu erhalten. Das Aromaschutzventil 10a ermöglicht einen Austritt von Gasen in eine Bewegungsrichtung, und zwar von einem Innenraum 95a des Verpackungsbehälters 90a, in welchem das Füllgut angeordnet ist, in eine Umgebung 96a des Verpackungsbehälters 90a. Ferner verhindert das Aromaschutzventil 10a ein Eindringen von Gasen, wie beispielsweise Sauerstoff, aus der Umgebung des Verpackungsbehälters 90a in den Innenraum 95a des Verpackungsbehälters 90a, um bevorzugt einen Aromaschutz für das Füllgut zu gewährleisten. Die Figur 2 zeigt eine Schnittdarstellung des an dem Verpackungsbehälter 90a angeordneten Aromaschutzventils 10a in einem geschlossenen Zustand des Aromaschutzventils 10a. Vorliegend weist das Aromaschutzventil 10a eine Haftfläche 56a auf und ist auf eine Außenwandung 92a des Verpackungsbehälters 90a geklebt.

Ein Öffnen zumindest einer Entlüftungsöffnung 52a des Aromaschutzventils 10a zum Austritt von Gasen erfolgt, wenn eine Solldruckdifferenz zwischen einem Druck im Innenraum 95a des Verpackungsbehälters 90a und einem Druck in der Umgebung 96a des Verpackungsbehälters 90a erreicht ist und/oder der Druck im Innenraum 95a des Verpackungsbehälters 90a über den atmosphärischen Druck steigt und damit die Adhäsions- und Kohäsionskräfte löst, um Gas über zumindest die Entlüftungsöffnung 52a entweichen zu lassen. Fällt die Druckdifferenz auf einen bestimmten, und zwar vordefinierten Soll-Wert ab, kann sich das Aromaschutzventil 10a wieder schließen, und zwar luftdicht verschließen, um damit ein Austreten von Gasen aus dem Innenraum 95a und/oder ein Eintreten von Gasen aus der Umgebung 96a des Verpackungsbehälters 90a in den Innenraum 95a zu verhindern.

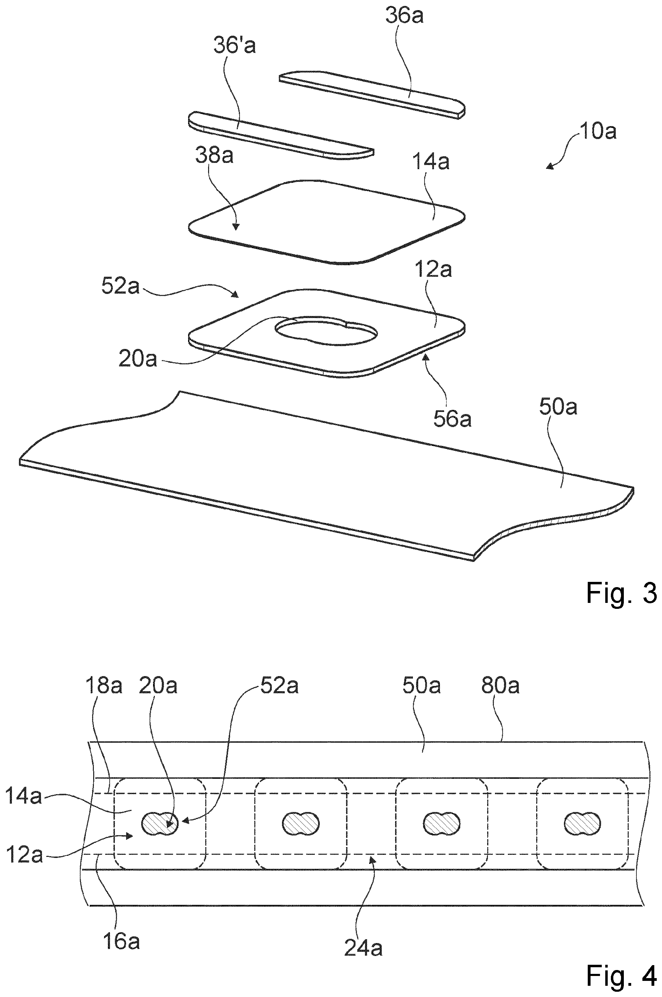

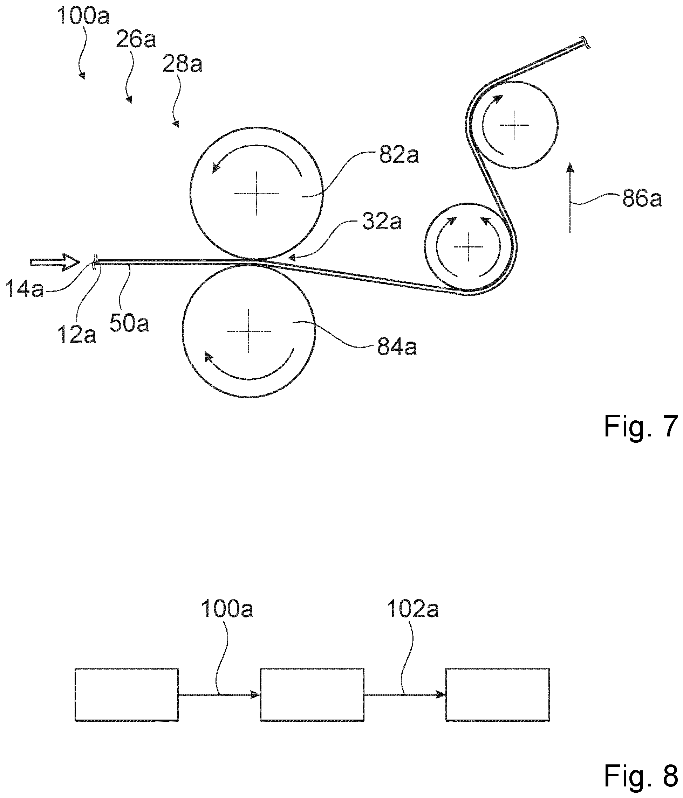

Zur Verdeutlichung eines Aufbaus des Aromaschutzventils 10a ist in Figur 3 eine Explosionsdarstellung des Aromaschutzventils 10a zu sehen. Das Aromaschutzventil 10a weist ein Basiselement 12a und eine Ventilmembran 14a auf. Die Ventilmembran 14a ist flexibel und biegsam ausgestaltet. Das Basiselement 12a wird in einem Verfahren zur Herstellung zumindest des Aromaschutzventils 10a in einem Fügeprozess 100a mittels Energieeintragung zumindest abschnittsweise mit dem Aromaschutzventil 10a verbunden. Figur 8 zeigt ein schematisches Verfahrensfließbild des Verfahrens zur Herstellung des Aromaschutzventils 10a, welches zumindest den Fügeprozess 100a umfasst.

Ferner weist das Basiselement 12a zumindest eine Öffnung 20a auf. Die Öffnung 20a ist Teil der Entlüftungsöffnung 52a. Ist das Aromaschutzventil 10a an dem Verpackungsbehälter 90a angeordnet, können durch die Öffnung 20a Gase von dem Innenraum 95a des Verpackungsbehälters 90a gegen die Ventilmembran 14a drücken, und zwar solange, bis diese sich verformt und/oder anhebt und der Öffnungsdruck groß genug ist, um die Entlüftungsöffnung 52a vollständig zu öffnen, damit die Gase in die Umgebung 96a des Verpackungsbehälters 90a entweichen können. Durch eine Änderung und/oder andersartige Ausgestaltung der Öffnung 20a, und zwar einer Öffnungsgeometrie der Öffnung 20a ist ein Öffnungs- und Schließdruckverhalten der Entlüftungsöffnung 52a, und zwar der Öffnungs- und Schließdruck beeinflussbar. Die Öffnung 20a weist in einer Draufsicht eine zumindest abschnittsweise runde Form auf. Beispielsweise könnte die Öffnung 20a in der Draufsicht eine kreisförmige oder eine Kleeblatt-, beispielsweise dreiblättrige oder vierblättrige Kleeblatt-, Form aufweisen. Vorliegend gleicht die Form der Öffnung 20a in der Draufsicht einer liegenden Acht.

Vorliegend wird ein Basiselement 12a verwendet, welches zumindest teilweise aus thermoplastischem Kunststoff, und zwar aus Polypropylen (PP) oder Polyethylen (PE) ausgebildet ist, verwendet. Das Basiselement 12a und die Ventilmembran 14a könnten zumindest teilweise oder zumindest zu einem Großteil aus unterschiedlichen Materialien ausgebildet sein. Vorliegend sind das Basiselement 12a und die Ventilmembran 14a zumindest teilweise, und zwar zumindest zu einem Großteil aus dem gleichen Material und/oder der gleichen Materialzusammensetzung ausgebildet. In dieser beispielhaften Ausgestaltung ist die Ventilmembran ebenfalls aus einem thermoplastischen Kunststoff, und zwar aus Polypropylen (PP) oder Polyethylen (PE) ausgebildet. Um einen Recyclinggrad zu erhöhen und Fremdstoffanteile zu verringern, besteht/bestehen das Basiselement 12a und/oder die Ventilmembran 14a aus Mono-PP oder Mono-PE. Ferner weisen das Basiselement 12a und die Ventilmembran 14a zumindest im Wesentlichen gleiche Ausdehnungseigenschaften auf.

Bei dem Verfahren zur Herstellung des Aromaschutzventils 10a ist das Basiselement 12a auf einem Grundelement 50a angeordnet (vgl. Figuren 3 bis 6). Bei dem Grundelement 50a handelt es sich vorliegend um eine Folienbahn. In einem späteren Applikationsprozess (nicht dargestellt), welcher hinsichtlich eines zeitlichen Verlaufs nach zumindest dem Fügeprozess 100a erfolgt, wird das Aromaschutzventil 10a, und zwar das Basiselement 12a von dem Grundelement 50a getrennt und an dem Verpackungsbehälter 90a angeordnet, vorliegend an den Verpackungsbehälter 90a, und zwar die Außenwandung 92a geklebt.

In dieser beispielhaften Ausgestaltung handelt es sich bei dem Fügeprozess 100a um einen kontinuierlichen Fügeprozess. In dem Fügeprozess 100a wird zumindest das Aromaschutzventil 10a auf Rollen gefertigt und/oder hergestellt. Vorliegend wird in dem Fügeprozess 100a eine Vielzahl von Aromaschutzventilen 10a auf dem Grundelement 50a hergestellt. Figur 4 verdeutlicht eine Anordnung einer Vielzahl von Basiselementen 12a auf dem Grundelement 50a, wobei lediglich eins der Basiselemente 12a mit einem Bezugszeichen versehen ist. In dieser beispielhaften Ausgestaltung sind die Basiselemente 12a bereits vorgestanzt und/oder vorgeschnitten und einzeln auf dem Grundelement 50a angeordnet. Alternativ könnte es sich auch um eine Basiselementbahn handeln. Oberhalb der Basiselemente 12a ist eine Ventilmembranbahn 24a, welche zumindest die Ventilmembran 14a ausbildet, angeordnet. Alternativ könnten eine Vielzahl von Ventilmembranen 14a einzeln zumindest teilweise auf und/oder oberhalb der Basiselemente 12a angeordnet sein. Der Einfachheit halber wird im Folgenden die Herstellung lediglich anhand eines Aromaschutzventils 10a beschrieben. Vorliegend sind die Vielzahl von Aromaschutzventilen 10a identisch zueinander ausgestaltet, sodass die Beschreibungen zum Aromaschutzventil 10a auf alle weiteren Aromaschutzventile 10a der Vielzahl von Aromaschutzventilen 10a übertragen werden können.

Das Basiselement 12a und die Ventilmembran 14a werden in dem Fügeprozess 100a entlang zumindest einer Fügenaht 16a miteinander verbunden. Die Fügenaht 16a ist zumindest ein Resultat der Energieeintragung in dem Fügeprozess 100a. Vorliegend sind das Basiselement 12a und die Ventilmembran 14a nach dem Fügeprozess 100a in und/oder mittels der Fügenaht 16a stoffschlüssig miteinander verbunden. Die Fügenaht 16a erstreckt sich zumindest abschnittsweise entlang einer Längserstreckung des Grundelements 50a. Aufgrund des kontinuierlichen Fügeprozesses 100a erstreckt sich die Fügenaht 16a über eine gesamte Längserstreckung des Grundelements 50a. Die Fügenaht 16a ist zumindest im Wesentlichen parallel zu zumindest einer Kante des Grundelements 50a, und zwar zumindest einer Längskante 80a des Grundelements 50a angeordnet (vgl. Figur 4).

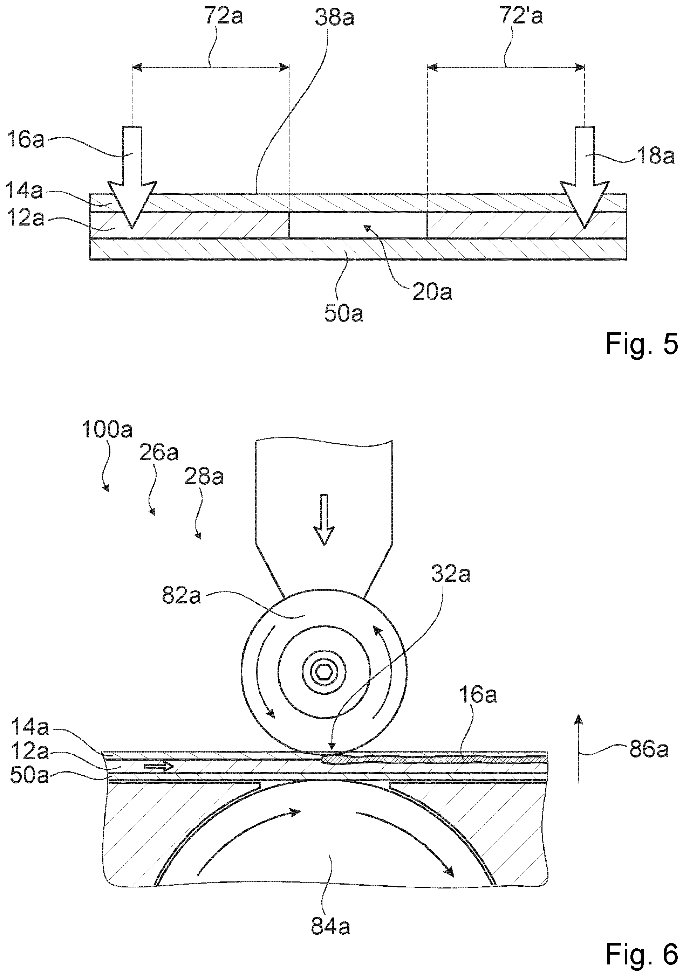

In dem Fügeprozess 100a wird das Basiselement 12a mit der Ventilmembran 14a entlang zumindest zweier Fügenähte 16a, 18a auf gegenüberliegenden Seiten der Öffnung 20a miteinander verbunden. Die beiden Fügenähte 16a, 18a sind zumindest im Wesentlichen parallel zueinander ausgerichtet und/oder angeordnet (vgl. Figuren 4 und 5). Die Fügenähte 16a, 18a weisen untereinander den gleichen Abstand zu der Öffnung 20a auf und/oder sind jeweils in einem gleichen Abstand 72a, 72'a zu der Öffnung angeordnet. Vorliegend sind die Fügenähte 16a, 18a identisch zu der Öffnung 20a beabstandet. Der Abstand 72a, 72'a zwischen der Öffnung 20a, und zwar einem äußeren Rand der Öffnung 20a und zumindest einem der Fügenähte 16a, 18a beträgt vorliegend zumindest 0,5 mm. Vorliegend sind die zwei genannten Fügenähte 16a, 18a identisch zueinander ausgebildet und/oder erzeugt, sodass die nachfolgende Beschreibung sich lediglich auf die Fügenaht 16a bezieht, jedoch auf alle anderen Fügenähte, und zwar zumindest die Fügenaht 18a übertragen werden kann.

Im Gegensatz zu bisherig bekannten Verfahren zur Herstellung zumindest eines Aromaschutzventils 10a, werden in dem Fügeprozess 100a die Ventilmembran 14 und das Basiselement 12a klebstofffrei miteinander verbunden. Vorliegend erfolgt die zumindest abschnittsweise Verbindung und/oder Fügung des Basiselements 12a und der Ventilmembran 14a unter Vermeidung von einem Klebstoff oder Klebstoffen, beispielsweise eines Klebebands oder Klebebändern. In dem Fügeprozess 100a wird/werden das Basiselement 12a und/oder die Ventilmembran 14a erwärmt. Vorliegend handelt es sich um eine lokale Erwärmung mittels der Energieeintragung im Bereich der Fügenaht 16a. In dieser beispielhaften Ausgestaltung werden das Basiselement 12a und die Ventilmembran 14a in dem Fügeprozess 100a zumindest abschnittsweise mittels einer Ultraschallschweißung 26a verbunden. Vorliegend handelt es sich bei der Ultraschallschweißung 26a um eine Ultraschall-Rollnahtschweißung 28a (vgl. Figur 6). Beim Ultraschallschweißen 26a werden das Basiselement 12a und die Ventilmembran 14a unter Einwirkung mechanischer Energie eines hochfrequenten Schalls erwärmt und durch Aufschmelzen ihres Materials gefügt. Die Erwärmung wird durch die in Bewegung gesetzten Moleküle erzeugt. Zumindest eine der Fügenähte 16a, 18a wird in dem Fügeprozess 100a durch Aneinanderpressen einer Ultraschall-Sonotrode 82a auf einen in Höhenrichtung 86a betrachtet unterhalb der Ultraschall-Sonotrode 82a angeordneten Amboss 84a erzeugt und/oder hergestellt.

Da es sich vorliegend um ein Ultraschall-Rollnahtschweißen 28a handelt, ist/sind die Ultraschall-Sonotrode 82a und/oder der Amboss 84a rollend angeordnet und dazu vorgesehen, in zumindest dem Fügeprozess 100a zumindest eine rollende Bewegung auszuführen. Möglicherweise könnte entweder der Amboss 84a oder die Ultraschall-Sonotrode 82a rollend angeordnet sein und/oder eine rollende Bewegung ausführen. In der vorliegenden beispielhaften Ausgestaltung gemäß Figur 6 sind sowohl der Amboss 84a als auch die Ultraschall-Sonotrode 82a rollend angeordnet. Vorliegend dreht sich die Ultraschall-Sonotrode 82a gegen den Uhrzeigersinn, während sich der Amboss 84a im Uhrzeigerinn dreht. Somit kann die Ultraschall-Sonotrode 82a auch als Rollsonotrode, Rollnahtsonotrode und/oder Rotationssonotrode bezeichnet werden. Dadurch kann ein besonders effizienter kontinuierlicher Fügeprozess 100a bereitgestellt und/oder ermöglicht werden.

Figur 7 zeigt ein Wegführen des Basiselements 12a, des Grundelements 50a und zumindest der Ventilmembran 14a aus einem Fügebereich 32a. Der Fügebereich 32a befindet sich zwischen der Ultraschall-Sonotrode 82a und dem Amboss 84a (vgl. Figuren 6 und 7). In Figur 7 sind die Ultraschall-Sonotrode 82a und der Amboss 84a lediglich schematisch angedeutet. Das Basiselement 12a und zumindest die Ventilmembran 14a werden nach Fügung zumindest im Wesentlichen horizontal von dem Fügebereich 32a weggeführt. Damit können störende Wölbungen und/oder Unebenheiten der Fügenähte 16a, 18a und/oder des Basiselements 12a und/oder der Ventilmembran 14a nach Fügung verhindert werden.

Gemäß Figuren 1 bis 3 ist ersichtlich, dass das Aromaschutzventil 10a zumindest ein Funktionselement 36a umfasst. Das Funktionselement 36a ist vorliegend als ein Abstandsstreifen ausgebildet. Denkbar wäre, dass das Aromaschutzventil 10a weitere Funktionselemente 36'a aufweist, welche möglicherweise unterschiedlich zu dem bereits genannten Funktionselement 36a ausgebildet sind. Vorliegend weist das Aromaschutzventil 10a zumindest zwei Funktionselemente 36a, 36'a auf, welche identisch zueinander ausgebildet sind. Nachfolgend wird lediglich das Funktionselement 36a beschrieben, wobei die Beschreibungen analog auf zumindest das weitere Funktionselement 36'a übertragbar sind. Das Funktionselement 36a wird in einem weiteren Fügeprozess 102a auf einer dem Basiselement 12a abgewandten Seite 38a der Ventilmembran 14a mit der Ventilmembran 14a verbunden. Hinsichtlich eines zeitlichen Verlaufs erfolgt der weitere Fügeprozess 102a nach dem Fügeprozess 100a (vgl. Figur 8). Der weitere Fügeprozess 102a könnte sich von dem bereits genannten Fügeprozess 100a unterscheiden. Beispielsweise könnte in dem weiteren Fügeprozess 102a das Funktionselement 36a klebend, beispielsweise mittels einer Klebefolie und/oder eines Klebstreifens, mit der Ventilmembran 14a, und zwar auf der dem Basiselement 12a abgewandten Seite 38a der Ventilmembran 14a mit der Ventilmembran 14a verbunden werden. Vorliegend wird das Funktionselement 36a mit einer analogen Fügemethodik mit der Ventilmembran 14a verbunden, wie die Ventilmembran 14a mit dem Basiselement 12a verbunden ist. Vorliegend sind der weitere Fügeprozess 102a und der Fügeprozess 100a hinsichtlich ihrer Fügemethodik identisch. Das Funktionselement 36a wird in dieser beispielhaften Ausgestaltung in dem weiteren Fügeprozess 102a zumindest abschnittsweise mittels Ultraschallschweißung 26a, und zwar mittels Ultraschall-Rollnahtschweißung 28a mit der Ventilmembran 14a verbunden.

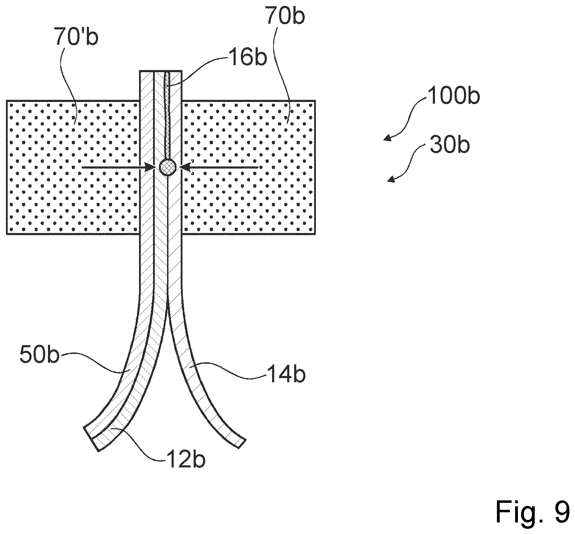

In der Figur 9 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 8 verwiesen werden kann. Zur Unterscheidung der Ausführungsbeispiele ist der Buchstabe a in den Bezugszeichen des Ausführungsbeispiels in den Figuren 1 bis 8 durch den Buchstaben b in den Bezugszeichen des Ausführungsbeispiels der Figur 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 8 verwiesen werden.

Figur 9 zeigt ein Verfahren zur Herstellung zumindest eines Aromaschutzventils mit einem Fügeprozess 100b in einer alternativen Ausgestaltung. Vorliegend werden ein Basiselement 12b und eine Ventilmembran 14b in dem Fügeprozess 100b zumindest abschnittsweise mittels einer Wärmekontaktsiegelung 30b miteinander verbunden. Bei der Wärmekontaktsiegelung 30b werden in dem Fügeprozess 100b zumindest zwei beheizte Siegelbacken 70b, 70'b mit einem vordefinierten Druck und/oder einer vordefinierten Siegelzeit zusammengedrückt, wobei zwischen den Siegelbacken 70b, 70'b das zu siegelnde Material, und zwar das Basiselement 12b und zumindest die Ventilmembran 14b angeordnet sind. Die beheizten Siegelbacken 70b, 70'b sind auf gegenüberliegenden Seiten des Basiselements 12b und der Ventilmembran 14b angeordnet und werden in dem Fügeprozess 100b mit einem Anpressdruck zusammengedrückt, sodass das Basiselement 12b und die Ventilmembran 14b miteinander verbunden, und zwar versiegelt werden.

## Patentansprüche

1. Verfahren zur Herstellung zumindest eines, insbesondere außenliegenden, Aromaschutzventils (10a) für einen Verpackungsbehälter, mit einem Basiselement (12a) und mit einer Ventilmembran (14a), welche mit dem Basiselement (12a) in einem Fügeprozess (100a) mittels Energieeintragung zumindest abschnittsweise verbunden wird, wobei das Basiselement (12a) und die Ventilmembran (14a) in dem Fügeprozess (100a) klebstofffrei miteinander verbunden werden, wobei das Basiselement (12a) und die Ventilmembran (14a) in dem Fügeprozess (100a) zumindest abschnittsweise mittels einer Ultraschallschweißung (26a) verbunden werden, **dadurch gekennzeichnet, dass**
das Basiselement (12a) und die Ventilmembran (14a) in dem Fügeprozess (100a) auf einem Grundelement (50a), insbesondere einer Folienbahn, das zu einer Handhabung und/oder Stabilisierung des Basiselements (12a) und/oder der Ventilmembran (14a) während des Fügeprozesses (100a) vorgesehen ist, miteinander verbunden werden.

2. Verfahren nach Anspruch 1, **dadurch gekennzeichnet, dass** das Basiselement (12a) und die Ventilmembran (14a) in einem kontinuierlichen Fügeprozess (100a) miteinander verbunden werden.

3. Verfahren nach Anspruch 1 oder 2, **dadurch gekennzeichnet, dass** das Basiselement (12a) und die Ventilmembran (14a) in dem Fügeprozess (100a) entlang zumindest einer Fügenaht (16a) miteinander verbunden werden.

4. Verfahren nach einem der vorhergehenden Ansprüche, **dadurch gekennzeichnet, dass** das Basiselement (12a) zumindest eine Öffnung (20a) aufweist und in dem Fügeprozess (100a) das Basiselement (12a) mit der Ventilmembran (14a) entlang zumindest zweier Fügenähte (16a, 18a) auf gegenüberliegenden Seiten der Öffnung (20a) miteinander verbunden werden.

5. Verfahren nach einem der vorhergehenden Ansprüche, **dadurch gekennzeichnet, dass** das Basiselement (12a) und/oder die Ventilmembran (14a) in dem Fügeprozess (100a) erwärmt wird/werden.

6. Verfahren nach einem der vorhergehenden Ansprüche, **dadurch gekennzeichnet, dass** das Basiselement (12a) und die Ventilmembran (14a) in dem Fügeprozess (100a) zumindest abschnittsweise mittels einer Ultraschall-Rollnahtschweißung (28a) verbunden werden.

7. Verfahren nach einem der vorhergehenden Ansprüche, **dadurch gekennzeichnet, dass** als Basiselement (12a) zumindest teilweise ein thermoplastischer Kunststoff verwendet wird.

8. Verfahren nach einem der vorhergehenden Ansprüche, **dadurch gekennzeichnet, dass** das Basiselement (12a) und die Ventilmembran (14a) zumindest im Wesentlichen gleiche Ausdehnungseigenschaften aufweisen.

9. Verfahren nach einem der vorhergehenden Ansprüche, **dadurch gekennzeichnet, dass** das Basiselement (12a) und die Ventilmembran (14a) zumindest teilweise aus dem gleichen Material ausgebildet sind.

10. Verfahren nach einem der vorhergehenden Ansprüche, **dadurch gekennzeichnet, dass** das Basiselement (12a) und die Ventilmembran (14a) nach Fügung zumindest im Wesentlichen horizontal von einem Fügebereich (32a) weggeführt werden.

11. Verfahren nach einem der vorhergehenden Ansprüche, **gekennzeichnet durch** zumindest ein Funktionselement (36a), welches in einem weiteren Fügeprozess (102a) auf einer dem Basiselement (12a) abgewandten Seite (38a) der Ventilmembran (14a) mit der Ventilmembran (14a) verbunden wird.

12. Aromaschutzventil (10a), insbesondere außenliegendes Aromaschutzventil, für einen Verpackungsbehälter, welches zumindest teilweise durch ein Verfahren nach einem der vorhergehenden Ansprüche hergestellt ist, **dadurch gekennzeichnet, dass** das Basiselement (12a) und die Ventilmembran (14a) in einem Fügeprozess (100a) auf einem Grundelement (50a), insbesondere einer Folienbahn, miteinander verbunden wurden, das für einen Applikationsprozess, in dem das Aromaschutzventil an dem Verpackungsbehälter anordenbar ist, entfernbar ist.

## Claims

1. Method for manufacturing at least one, in particular external, aroma protection valve (10a)for a packaging container, comprising a base element (12a) and a valve diaphragm (14a), which is joined at least partially to the base element (12a) in a joining process (100a) by means of energy input, the base element (12a) and the valve diaphragm (14a) being joined together without adhesive in the joining process (100a), the base element (12a) and the valve diaphragm (14a) being joined at least partially by means of ultrasonic welding (26a) in the joining process (100a), **characterized in that** the base element (12a) and the valve diaphragm (14a) are joined together in the joining process (100a) on a main element (50a), in particular a film web, which is intended for handling and/or stabilizing the base element (12a) and/or the valve diaphragm (14a) during the joining process (100a).

2. Method according to claim 1, **characterized in that** the base element (12a) and the valve diaphragm (14a) are joined together in a continuous joining process (100a).

3. Method according to claim 1 or 2, **characterized in that** the base element (12a) and the valve diaphragm (14a) are joined together in the joining process (100a) along at least one joining seam (16a).

4. Method according to any of the preceding claims, **characterized in that** the base element (12a) has at least one opening (20a) and in the joining process (100a) the base element (12a) is joined to the valve diaphragm (14a) along at least two joining seams (16a, 18a) on opposite sides of the opening (20a).

5. Method according to any of the preceding claims, **characterized in that** the base element (12a) and/or the valve diaphragm (14a) is/are heated in the joining process (100a).

6. Method according to any of the preceding claims, **characterized in that** the base element (12a) and the valve diaphragm (14a) are joined at least partially by means of ultrasonic roll seam welding (28a) in the joining process (100a).

7. Method according to any of the preceding claims, **characterized in that** a thermoplastic plastics material is used at least partially as the base element (12a).

8. Method according to any of the preceding claims, **characterized in that** the base element (12a) and the valve diaphragm (14a) have at least substantially the same expansion properties.

9. Method according to any of the preceding claims, **characterized in that** the base element (12a) and the valve diaphragm (14a) are at least partially made of the same material.

10. Method according to any of the preceding claims, **characterized in that** the base element (12a) and the valve diaphragm (14a) are guided away from a joining region (32a) at least substantially horizontally after joining.

11. Method according to any of the preceding claims, **characterized by** at least one functional element (36a) which is connected to the valve diaphragm (14a) in a further joining process (102a) on a side (38a) of the valve diaphragm (14a) facing away from the base element (12a).

12. Aroma protection valve (10a), in particular an external aroma protection valve, for a packaging container which valve is manufactured at least partially by a method according to any of the preceding claims, **characterized in that** the base element (12a) and the valve diaphragm (14a) were joined together in a joining process (100a) on a main element (50a), in particular a film web, which is removable for an application process in which the aroma protection valve can be arranged on the packaging container.

## Revendications

1. Procédé de fabrication d'au moins une soupape de protection d'arôme (10a), en particulier extérieure, pour un récipient d'emballage, comportant un élément de base (12a) et comportant une membrane de soupape (14a), laquelle est reliée, au moins dans certaines sections, à l'élément de base (12a) dans un processus d'assemblage (100a) au moyen d'un apport d'énergie, dans lequel l'élément de base (12a) et la membrane de soupape (14a) sont reliés entre eux sans colle dans le processus d'assemblage (100a), dans lequel l'élément de base (12a) et la membrane de soupape (14a) sont reliés, au moins dans certaines sections, dans le processus d'assemblage (100a) au moyen d'un soudage par ultrasons (26a), **caractérisé en ce que** l'élément de base (12a) et la membrane de soupape (14a) sont reliés entre eux dans le processus d'assemblage (100a) sur un élément de base (50a), en particulier une bande de film, qui est prévu pour une manipulation et/ou une stabilisation de l'élément de base (12a) et/ou de la membrane de soupape (14a) pendant le processus d'assemblage (100a).

2. Procédé selon la revendication 1, **caractérisé en ce que** l'élément de base (12a) et la membrane de soupape (14a) sont reliés entre eux dans un processus d'assemblage (100a) continu.

3. Procédé selon la revendication 1 ou 2, **caractérisé en ce que** l'élément de base (12a) et la membrane de soupape (14a) sont reliés entre eux dans le processus d'assemblage (100a) le long d'au moins un joint d'assemblage (16a).

4. Procédé selon l'une des revendications précédentes,
**caractérisé en ce que** l'élément de base (12a) présente au moins une ouverture (20a) et, dans le processus d'assemblage (100a), l'élément de base (12a) est relié à la membrane de soupape (14a) le long d'au moins deux joints d'assemblage (16a, 18a) sur des côtés opposés de l'ouverture (20a).

5. Procédé selon l'une des revendications précédentes,
**caractérisé en ce que** l'élément de base (12a) et/ou la membrane de soupape (14a) sont chauffés dans le processus d'assemblage (100a).

6. Procédé selon l'une des revendications précédentes,
**caractérisé en ce que** l'élément de base (12a) et la membrane de soupape (14a) sont reliés, au moins dans certaines sections, dans le processus d'assemblage (100a) au moyen d'une soudure à molettes par ultrasons (28a).

7. Procédé selon l'une des revendications précédentes, **caractérisé en ce qu'**une matière plastique thermoplastique est utilisée au moins partiellement comme élément de base (12a).

8. Procédé selon l'une des revendications précédentes,
**caractérisé en ce que** l'élément de base (12a) et la membrane de soupape (14a) présentent des propriétés de dilatation au moins sensiblement identiques.

9. Procédé selon l'une des revendications précédentes,
**caractérisé en ce que** l'élément de base (12a) et la membrane de soupape (14a) sont réalisés au moins partiellement dans le même matériau.

10. Procédé selon l'une des revendications précédentes, **caractérisé en ce que** l'élément de base (12a) et la membrane de soupape (14a) sont éloignés au moins sensiblement horizontalement d'une zone d'assemblage (32a) après l'assemblage.

11. Procédé selon l'une des revendications précédentes, **caractérisé par** au moins un élément fonctionnel (36a) qui est relié à la membrane de soupape (14a) dans un autre processus d'assemblage (102a) sur un côté (38a) de la membrane de soupape (14a) opposé à l'élément de base (12a).

12. Soupape de protection d'arôme (10a), en particulier soupape de protection d'arôme extérieure, pour un récipient d'emballage, laquelle est fabriquée au moins partiellement par un procédé selon l'une des revendications précédentes, **caractérisée en ce que** l'élément de base (12a) et la membrane de soupape (14a) ont été reliés entre eux dans un processus d'assemblage (100a) sur un élément de base (50a), en particulier une bande de film, qui peut être retiré pour un processus d'application dans lequel la soupape de protection d'arôme peut être disposée sur le récipient d'emballage.
